# EUROPEAN PATENT SPECIFICATION

(11) **EP 2 867 144 B1**
(45) Date of publication and mention of the grant of the patent: **26.07.2023**
(21) Application number: 13813587.6
(22) Date of filing: 28.06.2013
(51) Int. Cl.: B65F 5/00, B65G 53/40

(54) **METHOD AND APPARATUS FOR HANDLING MATERIAL IN A PNEUMATIC MATERIALS HANDLING SYSTEM**
VERFAHREN UND VORRICHTUNG ZUR MATERIALHANDHABUNG IN EINEM DRUCKLUFTMATERIALHANDHABUNGSSYSTEM
PROCÉDÉ ET APPAREIL POUR TRAITER UN MATÉRIAU DANS UN SYSTÈME PNEUMATIQUE DE TRAITEMENT DE MATÉRIAU

(30) Priority: 02.07.2012 FI 20125763
(43) Date of publication of application: 06.05.2015
(73) Proprietor: Maricap OY, 01450 Vantaa (FI)
(72) Inventor: SUNDHOLM, Göran, FI-04310 Tuusula (FI)
(74) Representative: Papula Oy
(86) International application number: PCT/FI2013/050718
(87) International publication number: WO 2014/006270

(56) References cited:
- WO-A1-82/03200
- WO-A2-2011/098667
- WO-A2-2011/098667
- DE-A1- 2 504 212
- JP-A- S5 419 571
- JP-A- S6 118 634
- US-A1- 2010 243 559

## Description

### Background of the invention

The object of the invention is a method as defined in the preamble of claim 1.

Another object of the invention is an apparatus as defined in the preamble of claim 9.

The invention relates generally to materials handling systems, such as partial-vacuum transporting systems, more particularly to the collection and conveying of wastes, such as to the conveying of household wastes.

Systems wherein wastes are conveyed in piping by means of an air current produced by a pressure difference or suction are known in the art. In these, wastes are conveyed long distances in the piping. It is typical to these systems that a partial-vacuum apparatus is used to achieve a pressure difference, in which apparatus a partial vacuum is achieved in the conveying pipe with partial-vacuum generators, such as with vacuum pumps or with an ejector apparatus. A conveying pipe typically comprises at least one valve means, by opening and closing which the replacement air coming into the conveying pipe is regulated. Input points at the input end of the material are used in the systems, from which input points the material, such as wastes, is conveyed into the system. The system can also comprise refuse chutes, into which material, such as waste material, is fed and from which the material to be conveyed is conveyed into a conveying pipe by opening a discharge valve means, in which case, by means of the suction effect achieved by the aid of the partial vacuum acting in the conveying pipe and also by means of the surrounding air pressure acting via the refuse chute, material such as e.g. waste material packed into bags, is conveyed from the refuse chute into the conveying pipe. The pneumatic waste conveying systems in question can be utilized particularly well in densely populated urban areas. These types of areas have tall buildings, in which the input of wastes into a pneumatic waste conveying system is performed via a refuse chute or other input point arranged in the building.

Wastes are conveyed pneumatically in a closed system to a reception station, in which the wastes are compressed with a press only after transportation. The pipes of a pneumatic conveying system are in normal cases rather large in diameter, e.g. in the region of 500 mm in their diameter. JP S 5419571A shows a refuse transportation system, capable of collecting and recovering waste material of refuse produced at a plurality of places, smoothly without causing interference there between.

Known from publication WO8203200 A1 is a device for fine-grinding, compressing and outputting a high-volume bulk good, more particularly household wastes, by means of which device the waste material conducted through the device can be compacted. In the solution according to the publication large output powers are typically needed, especially in situations in which the device is used to cut or fine-grind a material, in which case the energy consumption of the drive devices and the costs of the drive devices are high. In addition, the passage of stones or other corresponding material between the cutting blades can produce breakage of the blades. Further known from publications WO2011098666, WO2011098667, WO2011098668 and WO2011098669 are solutions in which rotary shapers are applied. Rotary shapers according to prior art comprise a number of rotatable handling members and typically a non-rotating handling member between them. These have proven to be effective for their purpose. A need has arisen, however, to achieve a solution for lighter shaping, in which the dimensions of the waste to be fed in or other reasons do not require powerful shaping according to prior art to be effected. On the other hand, the material packed into waste bags must be made to be conveyed smoothly from a space that is larger in dimension into smaller conveying piping. WO2011098667 discloses a method and an apparatus in accordance with the preambles of claims 1 and 9.

The aim of the present invention is to achieve an entirely new type of solution in connection with waste feeder channels and rotary shapers, by means of which solution the drawbacks of prior art solutions are avoided. Another aim of the invention is to achieve a solution for feeding waste bags into conveying piping in such a way that the waste bag is not broken in the handling.

### Brief description of the invention

The invention is based on a concept wherein waste to be infed is arranged and handled with one rotatable handling member, through which the material to be fed in is conducted from a first side to a second side, into an output aperture or at least into the proximity of it.

The method according to the invention is mainly characterized by what is stated in the characterization part of claim 1.

The method according to further aspects of the invention is also characterized by what is stated in claims 2-8.

The apparatus according to the invention is mainly characterized by what is stated in the characterization part of claim 9.

The apparatus according to further aspects of the invention is also characterized by what is stated in claims 10 - 15.

The solution according to the invention has a number of important advantages. By means of the invention a particularly efficient solution for the handling of material, more particularly for pneumatic pipe transport, is achieved. With the solution according to the invention, it is possible to organize, convey and, if necessary, shape the material to be fed in to fit into a conveying channel that is smaller in its inner dimensions than the input chute. The power requirement of the rotary shaper according to the invention is smaller than shapers according to prior art. With the solution according to the invention, the material to be fed in from an input chute can be arranged one unit at a time to be conveyed from the chute via the handling member of a shaper into the output aperture and onwards into a conveying channel. With the solution according to the invention, waste material can be efficiently fed and compacted with the rotary shaper, and efficient transportation can be achieved with a significantly smaller pipe size compared to unshaped waste material. By using suction, in addition to gravity, to convey the material to be handled from the rotary shaper into the transport pipe, an advantageous solution for a combination of a rotary shaper and pipe transport is achieved. With the solution according to the invention, waste bags can be made to be fed into piping in such a way that can significantly reduce the susceptibility to breakage of the waste bags.

### Brief description of the figures

In the following, the invention will be described in more detail by the aid of an embodiment with reference to the attached drawing, wherein
Fig. 1 presents a simplified diagram of one embodiment of an apparatus according to the invention.
Fig. 2 presents one embodiment of the device according to the invention,
Fig. 3 presents one embodiment of the device according to the invention,
Fig. 4 presents one embodiment of the device according to the invention, sectioned along the line IV-IV of Fig. 5,
Fig. 5 presents one embodiment of the device according to the invention, in a first position of the handling member,
Fig. 6 presents one embodiment of the device according to the invention, sectioned along the line VI-VI of Fig. 7,
Fig. 7 presents one embodiment of the device according to the invention, in a second position of the handling member,
Fig. 8 presents one embodiment of the device according to the invention, sectioned along the line VIII-VIII of Fig. 9,
Fig. 9 presents one embodiment of the device according to the invention, in a third position of the handling member,
Fig. 10 presents one embodiment of the device according to the invention, sectioned along the line X-X of Fig. 11, and
Fig. 11 presents one embodiment of the device according to the invention, in a fourth position of the handling member.

### Detailed description of the invention

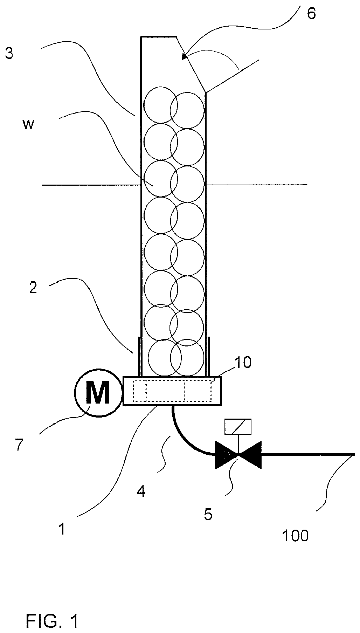

Fig. 1 presents a simplified diagram of one embodiment of the solution according to the invention, in which the rotary shaper device 1 is arranged in connection with a feeder channel 2, into which material is conducted e.g. from an input point 3, such as from an input chute, refuse chute or corresponding. The feeder channel 2 is e.g. a tubular part, inside the wall of which remains space for the material w to be fed in. The material w, such as household waste or other waste packed into bags, is fed, e.g. from an input aperture 6, into the input point 3 and from there onwards, via the feeder channel 2, into the rotary shaper 1. An openable and closable hatch, which is open in the situation of the figure, is in connection with the input aperture 6 in Fig. 1. The input point and feeder channel are in their dimensions, in their cross-sectional area, such that the material w, more particularly waste packed into bags, to be fed in fits into them side by side and one above the other. The material w to be handled is arranged, and if necessary is shaped and compacted, in the rotary shaper, and after handling the material is conducted via an output channel 4 into conveying piping 100 e.g. by means of gravity and/or by means of the suction and/or a pressure difference produced by the drive devices (not presented) of a pneumatic pipe transport system. One advantage of the embodiment of the invention is that the material w can be suitably arranged and be of such a shape that it can be fed in via the output aperture and fits in the transport piping 4, 100 for conveying. In this case conveying piping 100 that is significantly smaller in diameter than usual can be used. According to one embodiment a pipe with a diameter in the region of 150-300 mm, preferably in the region of 200 mm, can be used as a conveying pipe 100. According to one embodiment the material w is packed into bags, the average diameter of which is to some extent larger than the diameter of the conveying pipe. For example the diameter of a bag when filled is in the region of 220-270 mm, when the diameter of the conveying pipe is in the region of 200 mm. In this case with the solution according to the invention a bag and the material in it can be made to be conveyed with the handling member to the point of, or into the proximity of, the output aperture, from where the material is conducted via the output channel 4 into conveying piping 100, e.g. by means of gravity and/or by means of the suction and/or a pressure difference produced by the drive devices of a pneumatic pipe transport system.

In the embodiment of the invention simultaneous suction can be used, in which case the material to be handled can be acted upon with suction or with a pressure difference acting via the conveying pipe 100 and the output coupling 4 when conducting the material through the aperture 20 of the handling member 10 of the rotary shaper 1. The material w is made to be fed in with a rotary shaper typically e.g. one unit, such as a batch of material packed into a bag, at a time. The handling member 10 is ring-like, comprising an aperture 20 from the first side 23 of the handling member, from the inlet side, to the other side 24, to the outlet side. The handling member 10 is rotated in the embodiment of the figure around the vertical axis with the drive device 7. In one embodiment of the invention the aperture 20 of a handling member is arranged eccentrically with respect to the axis of rotation of the handling member 10. Below the rotary shaper 1, in the output channel 4, is a valve member 5. The valve member 5 opens and closes the connection between the rotary shaper 1 and the conveying pipe 100. With the valve member 5 the infeed of material into the conveying pipe 100, and possibly also the suction effect achieved by the partial-vacuum generator of the pneumatic waste-transporting system from the conveying pipe 100 into the rotary shaper 1, is adjusted.

In Fig. 1 material w has been fed into an input point 3, such as into an input chute, from an input aperture 6. The material w is described in the figures with balls, but it can be material of many types and shapes, such as e.g. household waste or other waste packed into bags.

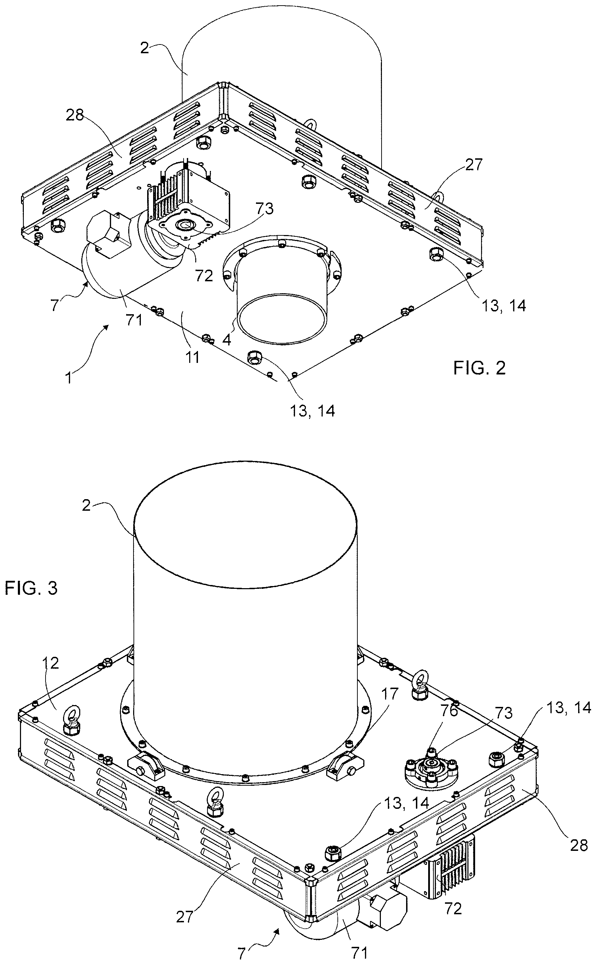

Figs. 2 and 3 present one rotary shaper 1 according to an embodiment of the invention. In one embodiment the frame of the rotary shaper 1 comprises a lid plate 12 and a base plate 11, which are arranged with support means 13, 14 one above the other at a distance from each other. An input aperture 19 is formed in the lid plate 12, into which a feeder channel 2 is arranged in such a way that the material w is funneled into the input aperture. An aperture 18, which is configured to be face-to-face with the output aperture 40 of the output channel 4, is formed in the base plate 11. The handling member 10 of the rotary shaper is arranged in a manner allowing rotation in the space between the lid plate 12 and the base plate 11. Side walls 27, 28 are arranged between the lid plate 12 and the base plate 11.

A drive device 7 is arranged to rotate the handling member 10. The drive device 7 in the figure comprises a motor 71 arranged on the bottom surface, below it, of the base plate 11 of the rotary shaper 1, a gear transmission 72, which in the figure is an angle transmission, a drive shaft 73, which is arranged rotatably, in the figure with bearing means 76, between the lid plate 12 and the base plate 11. A belt wheel 74 is arranged on the drive shaft 73. In one embodiment a drive belt 75 is arranged to rotate the handling member 10. The outer rim 29 of the handling member 10 is configured to function as a countersurface for the drive belt 75 of the belt transmission. When the drive device rotates the drive shaft 73 the belt wheel 74 moves the drive belt 75, which in turn rotates the handling member 10 around its rotation axis.

The outer rim 29 of the handling member 10 can be shaped suitably. For example, a cambered or barrel-like shape has been observed to be very effective in one embodiment. The rotation trajectory of the handling member 10 is achieved by arranging guide means 15, 16 and/or bearing means 17 on the lid plate and/or on the base plate and countermeans 25, 26, such as a groove, or e.g. a rim-shaped rolling surface or sliding surface, on the ring-shaped handling member 10, on its first surface 23 and/or on its second surface. The guide means and/or bearing means are, according to one embodiment, arranged in a distributed manner on the rotation rim of the handling member, in the area between the outer rim 29 of the handling device and the most extensive rotation rim of the edge 21 of the aperture 20.

Typically the guide means 15, 16 and/or the bearing means 17 are arranged between the ring-shaped handling member 10 and the lid plate 12 and/or base plate 11 of the frame part. It can also be conceived that separate rolling means 17 are not used, but instead the handling member is arranged to rest on the base plate 11 and/or on the lid plate 12 of the frame part.

The rotary shaper 1 thus comprises a frame, onto which a ring-like handling member is arranged. In the vertical direction the ring-like handling member 10, which comprises an aperture 20 leading from the first side 23 to the second side 24 of the handling member, is arranged below the input aperture 19 of the material to be handled. The ring-like handling member 10 is configured around a geometric axis in connection with a relative rotational movement, which axis is mainly identical with the geometric axis of the input chute 2, to convey material w through the ring-like handling member 10 by gravity and/or by means of the suction/pressure-difference produced by the partial-vacuum generators of a pneumatic materials handling system, such as of a pipe transport system. The material fed in with the handling member is fetched from the periphery and arranged in the center of the handling member at least by shaping the bulk good with the combined action of the aperture 20 of the rotating handling member, the edge and at least one rigid (non-rotating) aperture, the input aperture 19 and/or the output aperture 18, 40. The speed of rotation and the direction of rotation of the rotatable handling member 10 can be changed.

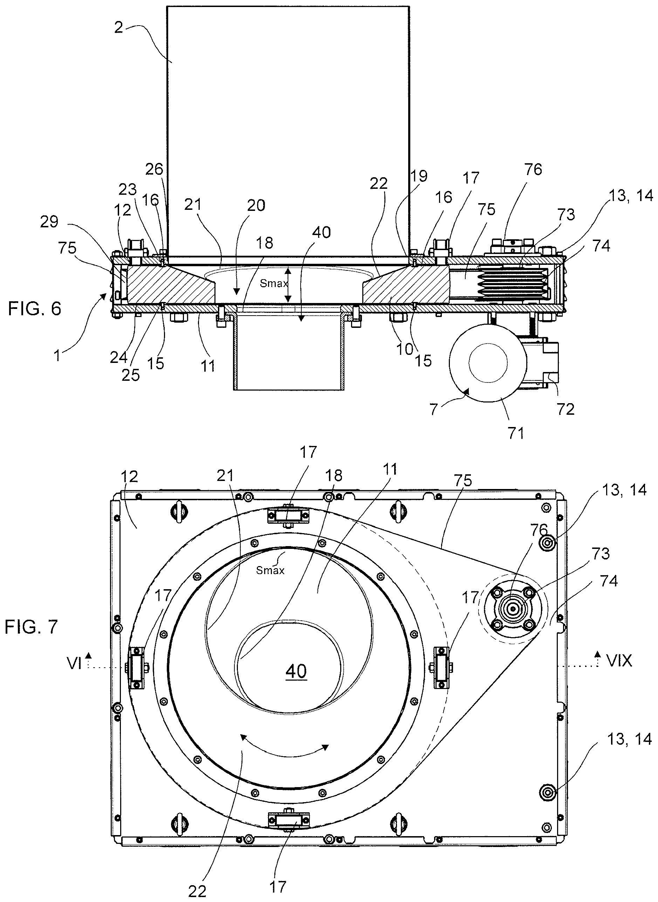

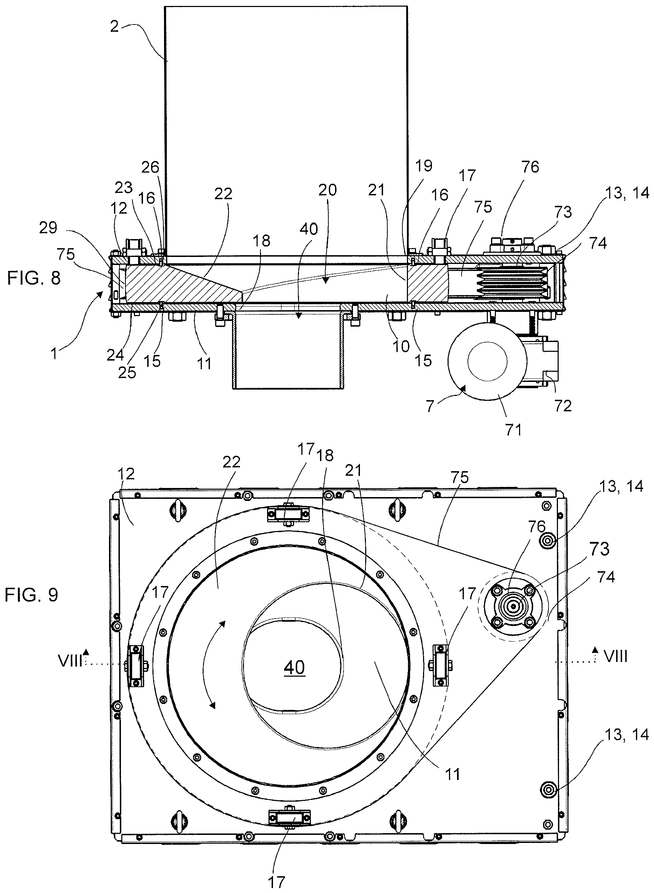

The handling member in the embodiment according to Figs. 6, 7,8, 9, 10 and 11 has an aperture 20 of round shape. The output aperture 18 of the base plate 11 is oval shaped in the figures. The output aperture 18 of the base plate then has curved sections and short, straight sections between them. The aperture 20 of the handling member is arranged asymmetrically with respect to the axis of rotation of the handling member. The aperture 20 of the handling member has an inner surface 21. The inner surface 21 of the aperture of the handling member shapes the material to be handled. The figures illustrate different situations when the shaping member 10 are moved during the handling of the material.

The rotary shaper thus functions in a way as a re-arranger and compactor (i.e. as a formatter) of the material w to be handled. The handling member 10 of the rotary shaper arranges and shapes the material to be handled so that it fits into the output aperture 18 of the base plate 11 and onwards into the aperture 40 of the output channel.

In the case of the figures, the shape of the aperture 20 of the handling member 10 is a symmetrical hole (shape), e.g. round. It can be conceived that it is also some other shape, such as oval. A material unit to be handled, such as waste material packed into a bag, remains in the aperture 20 when the handling member is rotating, and is displaced from the aperture 20 onwards into the output aperture.

The direction of rotation of the handling member can be changed. Should too large a load arise, the wheel stops and the direction of rotation is changed.

It has been shown that the power required of the drive device is extremely small, e.g. in one embodiment in the region of only 0.5-1.5 kW. The power requirement depends on the operating site.

When the handling member 10 is rotating, the inner surface 21 of the aperture 20 determines the through-passage aperture 20 through the handling member, and onwards into the output aperture 18, 40, that is free of obstacles. Means, such as a threaded groove or a ridge, which when the handling member rotates in the input direction at the same time feeds the material to be handled from the aperture 20 onwards in the handling direction, can thus be formed on the inner surface 21 of a handling member.

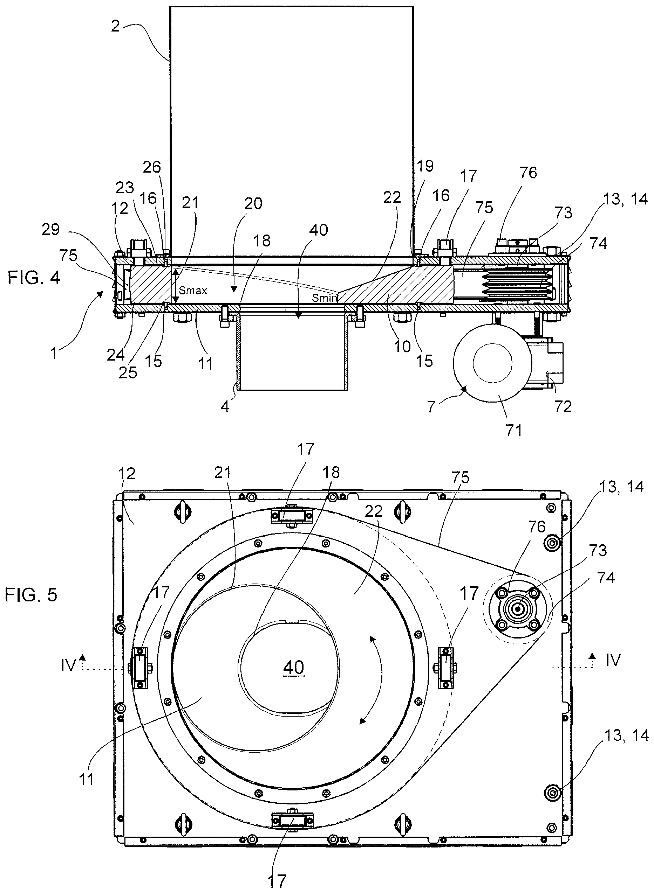

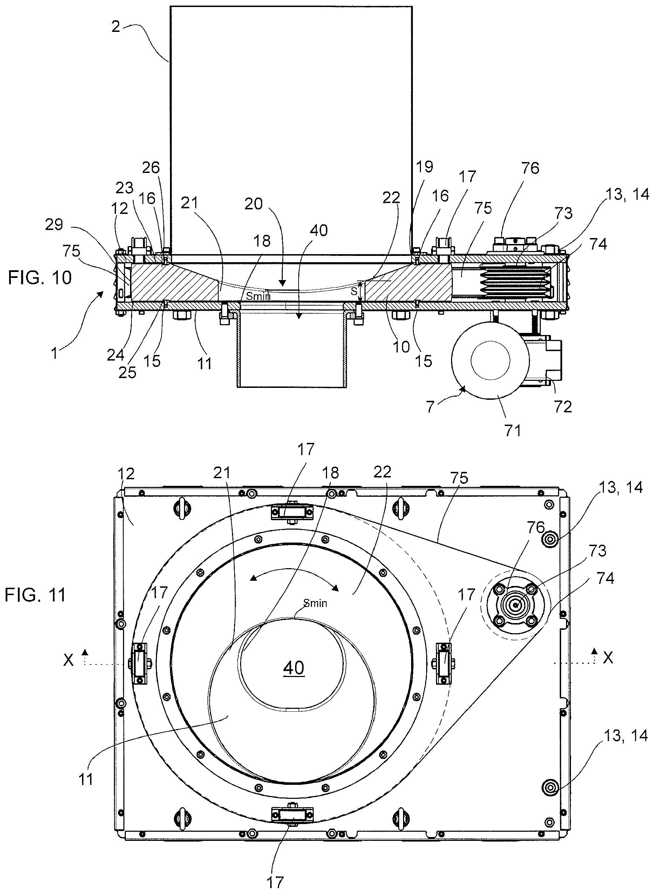

In the embodiment according to the figures the surface 22 of the handling member 10 is at least partly sloping from the side of the input aperture 19 towards the edge of the wall 21 of the aperture 20 of the handling member, at least towards that edge section of the wall that is close to the output aperture 18, 40. With the sloping any liquids caused by the input chute and/or the material can be conducted onwards into the piping. The top surface of the handling member can, according to one embodiment, be straight. In the figure, the thickness of the handling member changes in the area that is at the point of the input aperture 19. According to one embodiment the thickness S of the handling member 10, i.e. the distance from the bottom surface 24 of the handling member, at the point of the edge 21 of the aperture 20, decreases towards the output aperture 18, 40. This can be seen e.g. from Figs. 4, 6, 7, 10 and 11, in which is marked in Fig. 6 the thickness S at its maximum (Smax) of the wall of the edge of the aperture, when the distance from the output aperture 40 is greatest, and in Fig. 10 the thickness of the wall of the edge 21 of the aperture 20 is at its minimum (Smin), when the distance from the output aperture 40 is at its smallest (in Fig. 10 and 11). The part of the section of the edge 21 of the aperture 20 of the handling member is, in actual fact, on the inside of the rim of the edge 18 of the output aperture 40.

The ring-like handling member 10, or at least a part of it, and the inner surface 21 of its aperture 20 can be patterned and/or arranged to be such in their shape that its rotational movement simultaneously feeds material onwards from the aperture 20 towards the output end and the output aperture 40.

In the embodiment of the figures, the surface 22 on the side of the input aperture 19 of the handling member is formed to slope towards the edge 21 of the aperture 20. The sloping shape conducts liquids towards the output aperture.

The material conducted through the aperture 20 of the handling member 10 in the rotary shaper is compressed and compacted. The smallest rotation rim of the edge of the aperture 20 of the rotary shaper is, according to one embodiment, arranged to be to some extent smaller than the outer edge 18 of the output aperture following it.

When the handling member 10 is rotating, the surface 21 of the edge of the aperture determines the through-passage aperture through the handling member that is free of obstacles. Members, such as a threaded groove or a ridge, which when the handling member rotates in the input direction at the same time feeds the material to be handled from the aperture onwards in the handling direction, can thus be formed on the inner surface 21 of the handling member.

The general operation of a prior-art rotary press is presented e.g. in publication WO8203200 A1, and it is not described in more detail in this publication.

The degree of shaping can be influenced with the size and shape of the aperture of the shaping member, and also with the patterning on the inner edge of the aperture. Household waste fed as a shaped stream into the conveying pipe is conveyed in the pipe onwards by means of suction and/or a pressure difference to the reception location, such as to a waste station or corresponding.

The rotary shaper 1 is, according to one embodiment, preferably driven in a sequence, which has a certain set duration t₁, for the extent of which the handling member 10 is rotated with the drive device 7 in a first direction, after which the direction of rotation is changed. After this the handling member 10 is rotated in the opposite direction for the extent of a second period of time t₂. The first direction is the actual handling direction of the shaper. The second direction is that in which the possible blade part of the handling member is configured to cut the material. The rotation duration t₂ of the second direction of rotation is typically shorter than the duration t₁ of the first direction of rotation. According to one embodiment preferably an equation is followed, according to which t₂ = 0.5 * t₁.

Typically the rotation duration t₁ of the first handling direction is in the order of 10 seconds and the duration t₂ of the opposite direction of rotation is 5 seconds.

The rotary shaper thus functions in a way as a re-arranger and compactor (i.e. as a formatter). Under the effect of suction the handling member 10 of the rotary shaper shape the material to be handled so that it fits into the output aperture and onwards into the conveying pipe 100.

The general operation of a prior-art rotary shaper is presented e.g. in publications WO8203200, WO2011098666, WO2011098667, WO2011098668 and WO2011098669, and it is not described in more detail in this publication.

The invention thus relates to a method for handling material in a pneumatic pipe transfer system, in which material, such as waste material, is input from an input aperture of an input point 3, such as from the input aperture of a refuse chute or of some other input point, and is conducted along a feeder channel 2 with a shaper device 1 arranged in connection with the input point or in the proximity of it, in which case the material to be handled is conducted into the shaper device and/or through it by the aid of at least partly gravity and/or the suction and/or a pressure difference of the pneumatic pipe transport system. In the method the material is handled with one handling member 10 in a shaper device 1, which handling member is rotated around an axis of rotation when handling material and which handling member comprises an aperture 20, which is arranged eccentrically with respect to the axis of rotation of the handling member, that the rotatable handling member 10 arranges the material to be infed into the proximity of the output aperture and, if necessary, shapes the material, together with at least an edge 18 of the output aperture of the rotary shaper and/or the wall of the output channel 4, when the handling member 10 is rotated with the drive device 7.

According to one embodiment the thickness S of the handling member 10, i.e. the distance of its top surface from the bottom surface 24 of the handling member, at the point of the edge 21 of the aperture 20, decreases towards the output aperture 18, 40 of the shaper device.

According to one embodiment the handling member 10 of the rotary shaper feeds the material to be handled through the aperture 20 of the handling member and/or through the output aperture 18, 40 of the shaper device, when rotating the handling member in the first direction.

According to one embodiment the material is shaped with the wall 21 of the aperture of the handling member and the edge 18 of the output aperture and/or the wall of the output channel 40.

According to one embodiment the direction of rotation of the handling member 10 can be changed.

According to one embodiment a section 22 of the surface inclined to slope towards the aperture 20 is formed in the top surface 24 of the handling member.

According to one embodiment the pneumatic materials handling system is a pipe transport system of material, more particularly waste material, wherein waste, most preferably packed into bags, is conveyed from an input point into a separating device, where the waste being transported is separated from the transporting air.

According to one embodiment the rotatable handling member 10 is driven in sequences, in which case the handling member 10 is rotated in a first direction for the extent of a first period of time t₁ and after that in the opposite direction for a second period of time t₂.

The invention also relates to an apparatus for handling material in a pneumatic pipe transport system, in which material, such as waste material, is input from an input aperture of an input point 3, such as from the input aperture of a refuse chute or of some other input point, and is conducted along a feeder channel 2 with a shaper device 1 arranged in connection with the input point or in the proximity of it, in which case the material to be handled is conducted into the shaper device and/or through it by the aid of at least partly gravity and/or the suction and/or a pressure difference of the pneumatic pipe transport system. The apparatus comprises a handling member 10 in a shaper device 1, which handling member is configured to be rotated around an axis of rotation when handling material and which comprises an aperture 20, which is arranged eccentrically with respect to the axis of rotation of the handling member, that the rotatable handling member 10 is configured to arrange the material to be infed into the proximity of the output aperture and, if necessary, to shape the material, together with at least an edge 18 of the output aperture of the rotary shaper and/or the wall of the output channel 4, when the handling member 10 is rotated with the drive device 7.

According to one embodiment the thickness S of the handling member 10, i.e. the distance of its top surface from the bottom surface 24 of the handling member, at the point of the edge 21 of the aperture 20, decreases towards the output aperture 18, 40 of the shaper device.

According to one embodiment the handling member 10 of the rotary shaper feeds the material to be handled through the aperture 20 of the handling member and/or through the output aperture 18, 40 of the shaper device, when rotating the handling member in the first direction.

According to one embodiment the direction of rotation of the handling member 10 can be changed.

According to one embodiment a section 22 of the surface inclined to slope towards the aperture 20 is formed in the top surface 24 of the handling member.

According to one embodiment the pneumatic materials handling system is a pipe transport system of material, more particularly waste material, wherein waste, most preferably packed into bags, is conveyed from an input point into a separating device, where the waste being transported is separated from the transporting air.

According to one embodiment the direction of rotation of the rotatable handling member 10 is configured to be changeable, e.g. in sequences.

Typically the material is waste material, such as waste material arranged in bags. A refuse chute can be configured to be a part of a pneumatic waste conveying system or it can be a separate part, in which waste material is conducted into a waste room, waste tank or corresponding.

It is obvious to the person skilled in the art that the invention is not limited to the embodiments presented above, but that it can be varied within the scope of the claims presented below. The characteristic features possibly presented in the description in conjunction with other characteristic features can if necessary be used separately to each other, as long as the resulting combination falls within the scope of the appended claims.

## Claims

1. Method for handling material in a pneumatic pipe transfer system, in which material, such as waste material, is input from an input aperture of an input point (3), such as from the input aperture of a refuse chute or of some other input point, and is conducted along a feeder channel (2) with a shaper device (1) arranged in connection with the input point, in which case the material to be handled is conducted into the shaper device and/or through it by the aid of at least partly gravity and/or the suction and/or a pressure difference of the pneumatic pipe transport system, **characterized in that** in the method the material is handled with one rotatable handling member (10) in the shaper device (1), which the one rotatable handling member is rotated around an axis of rotation when handling material and which one rotatable handling member comprises an aperture (20), which is arranged eccentrically with respect to the axis of rotation of the one rotatable handling member, **in that** the one rotatable handling member (10) arranges the material to be infed into the proximity of an output aperture and shapes the material, together with at least an edge (18) of the output aperture of the shaper device and/or a wall of an output channel (4), when the one rotatable handling member (10) is rotated with a drive device (7), wherein the material (w) is made to be fed in with the shaper device typically e.g. one unit, such as a batch of material packed into a bag, at a time, wherein the one rotatable handling member (10) is ring-like, comprising the aperture (20) from a first side (23), an inlet side, of the one rotatable handling member, to an other side (24), an outlet side.

2. Method according to claim 1, **characterized in that** the one rotatable handling member (10) of the shaper device feeds the material to be handled through the aperture (20) of the one rotatable handling member and through the output aperture (18, 40) of the shaper device, when rotating the one rotatable handling member in the first direction.

3. Method according to claim 1 or 2, **characterized in that** the material is shaped with the wall (21) of the aperture of the one rotatable handling member and the edge (18) of the output aperture of the rotary shaper and the wall of the output channel (40).

4. Method according to any of claims 1 - 3, **characterized in that** the thickness (S) of the one rotatable handling member (10), i.e. the distance of its top surface from the bottom surface (24) of the one rotatable handling member, at the point of the edge (21) of the aperture (20), decreases towards the output aperture (18, 40) of the shaper device.

5. Method according to any of claims 1-4, **characterized in that** the direction of rotation of the one rotatable handling member (10) can be changed.

6. Method according to any of claims 1-5, **characterized in that** a section (22) of the surface inclined to slope towards the aperture (20) is formed in the top surface (24) of the one rotatable handling member.

7. Method according to any of claims 1 - 6, **characterized in that** the pneumatic materials handling system is a pipe transport system of material, more particularly waste material, wherein waste, most preferably packed into bags, is conveyed from the input point into a separating device, where the waste being transported is separated from the transporting air.

8. Method according to any of claims 1-7, **characterized in that** the one rotatable handling member (10) is driven in sequences, in which case the one handling member (10) is rotated in a first direction for the extent of a first period of time (t₁) and after that in the opposite direction for a second period of time (t₂).

9. Apparatus for handling material in a pneumatic pipe transfer system, in which material, such as waste material, can be input from an input aperture of an input point (3) of said pneumatic pipe transfer system, such as from the input aperture of a refuse chute or of some other input point of said pneumatic pipe transfer system, the apparatus comprising a feeder channel (2) adapted so that said material can be conducted along said feeder channel (2), and a shaper device (1) with said feeder channel (2) arranged to be in connection with the input point, the shaper device being configured such that the material to be handled can be is conducted into the shaper device and/or through it by the aid of at least partly gravity and/or suction and/or a pressure difference of the pneumatic pipe transport system, **characterized in that** the apparatus comprises one rotatable handling member (10) in said shaper device (1), wherein the one rotatable handling member is configured to be rotated around an axis of rotation when handling material and which the one rotatable handling member comprises an aperture (20), which is arranged eccentrically with respect to the axis of rotation of the one rotatable handling member, **in that** the one rotatable handling member (10) is configured to arrange the material to be infed into the proximity of an output aperture and to shape the material, together with at least an edge (18) of the output aperture of the shaper device and/or a wall of an output channel (4), when the one rotatable handling member (10) is rotated with a drive device (7), wherein the shaper device is configured such that the material (w) can be fed in the shaper device as one unit, such as a batch of material packed into a bag, at a time, wherein the one rotatable handling member (10) is ring-like and comprises said aperture (20) from a first side (23), an inlet side, of the one rotatable handling member, to an other side (24), an outlet side.

10. Apparatus according to claim 9, **characterized in that** the one rotatable handling member (10) of the shaper device is arranged to feed the material to be handled through the aperture (20) of the one rotatable handling member and/or through the output aperture (18, 40) of the shaper device, when rotating the one rotatable handling member in the first direction.

11. Apparatus according to claim 9 or 10, **characterized in that** the direction of rotation of the one rotatable handling member (10) is configured to be changeable.

12. Apparatus according to any of claims 9 - 11, **characterized in that** the thickness (S) of the one rotatable handling member (10), i.e. the distance of its top surface from the bottom surface (24) of the one rotatable handling member, at the point of the edge (21) of the aperture (20), decreases towards the output aperture (18, 40) of the shaper device.

13. Apparatus according to any of claims 9 - 12, **characterized in that** a section (22) of the surface inclined to slope towards the aperture (20) is formed in the top surface (24) of the one rotatable handling member.

14. Apparatus according to any of claims 9 - 13, **characterized in that** the pneumatic materials handling system is a pipe transport system of material, more particularly waste material, and is configured such that waste, most preferably packed into bags, is conveyed from the input point into a separating device, where the waste being transported is separated from the transporting air.

15. Apparatus according to any of claims 9 - 14, **characterized in that** the direction of rotation of the one rotatable handling member (10) is configured to be changeable in sequences.

## Patentansprüche

1. Verfahren zum Handhaben von Material in einem pneumatischen Rohrtransportsystem, bei dem Material, wie z.B. Abfallmaterial, von einer Eingangsöffnung einer Eingangsstelle (3), wie z.B. von der Eingangsöffnung eines Müllschachtes oder einer anderen Eingangsstelle, eingeleitet und entlang eines Zuführkanals (2) mit einer in Verbindung mit der Eingangsstelle angeordneten Formgebungsvorrichtung (1) geleitet wird, wobei das zu behandelnde Material mit Hilfe zumindest teilweise der Schwerkraft und/oder des Sogs und/oder einer Druckdifferenz des pneumatischen Rohrtransportsystems in die Formgebungsvorrichtung und/oder durch sie hindurch geleitet wird, **dadurch gekennzeichnet, dass** bei dem Verfahren das Material mit einem drehbaren Handhabungselement (10) in der Formgebungsvorrichtung (1) gehandhabt wird, wobei das eine drehbare Handhabungselement um eine Drehachse gedreht wird, wenn es Material handhabt, und wobei das eine drehbare Handhabungselement eine Öffnung (20) umfasst, die in Bezug auf die Drehachse des einen drehbaren Handhabungselements exzentrisch angeordnet ist, so dass das eine drehbare Handhabungselement (10) das einzuleitende Material in die Nähe einer Ausgangsöffnung bringt und das Material zusammen mit mindestens einer Kante (18) der Ausgangsöffnung der Formgebungsvorrichtung und/oder einer Wand eines Ausgangskanals (4) formt, wenn das eine drehbare Handhabungselement (10) mit einer Antriebsvorrichtung (7) gedreht wird, wobei das Material (w) dazu gebracht wird, mit der Formgebungsvorrichtung typischerweise z. B. in einer Einheit zugeführt zu werden, z. B. eine Einheit, wie z. B. eine Charge von in einem Beutel verpacktem Material, zu einem Zeitpunkt zugeführt wird, wobei das eine drehbare Handhabungselement (10) ringförmig ist und die Öffnung (20) von einer ersten Seite (23), einer Einlassseite, des einen drehbaren Handhabungselements zu einer anderen Seite (24), einer Auslassseite, umfasst.

2. Verfahren nach Anspruch 1, **dadurch gekennzeichnet, dass** das eine drehbare Handhabungselement (10) der Formgebungsvorrichtung das zu behandelnde Material durch die Öffnung (20) des einen drehbaren Handhabungselements und durch die Ausgangsöffnung (18, 40) der Formgebungsvorrichtung zuführt, wenn das eine drehbare Handhabungselement in die erste Richtung gedreht wird.

3. Verfahren nach Anspruch 1 oder 2, **dadurch gekennzeichnet, dass** das Material mit der Wand (21) der Öffnung des einen drehbaren Handhabungselements und dem Rand (18) der Ausgangsöffnung des Rotationsformers und der Wand des Ausgangskanals (40) geformt wird.

4. Verfahren nach einem der Ansprüche 1 bis 3, **dadurch gekennzeichnet, dass** die Dicke (S) des einen drehbaren Handhabungselements (10), d.h. der Abstand seiner oberen Fläche von der unteren Fläche (24) des einen drehbaren Handhabungselements, an der Stelle des Randes (21) der Öffnung (20) in Richtung der Ausgangsöffnung (18, 40) der Formgebungsvorrichtung abnimmt.

5. Verfahren nach einem der Ansprüche 1-4, **dadurch gekennzeichnet, dass** die Drehrichtung des einen drehbaren Handhabungselements (10) geändert werden kann.

6. Verfahren nach einem der Ansprüche 1 bis 5, **dadurch gekennzeichnet, dass** in der oberen Fläche (24) des einen drehbaren Handhabungselements ein Abschnitt (22) der zur Öffnung (20) hin geneigten Fläche ausgebildet ist.

7. Verfahren nach einem der Ansprüche 1 bis 6, **dadurch gekennzeichnet, dass** das pneumatische Materialfördersystem ein Rohrtransportsystem für Material, insbesondere Abfall, ist, wobei der Abfall, vorzugsweise in Säcken verpackt, von der Eingangsstelle in eine Trennvorrichtung gefördert wird, wo der zu transportierende Abfall von der Transportluft getrennt wird.

8. Verfahren nach einem der Ansprüche 1-7, **dadurch gekennzeichnet, dass** das eine drehbare Handhabungselement (10) in Sequenzen angetrieben wird, wobei das eine Handhabungselement (10) für die Dauer einer ersten Zeitspanne (t₁) in eine erste Richtung und danach für eine zweite Zeitspanne (t₂) in die entgegengesetzte Richtung gedreht wird.

9. Vorrichtung zum Handhaben von Material in einem pneumatischen Rohrtransportsystem, in das Material, wie z.B. Abfallmaterial, von einer Eingangsöffnung einer Eingangsstelle (3) des pneumatischen Rohrtransportsystems, wie z. B. von der Eingangsöffnung eines Müllschachtes oder einer anderen Eingangsstelle des pneumatischen Rohrtransportsystems, eingeleitet werden kann, wobei die Vorrichtung einen Zuführungskanal (2) umfasst, der so angepasst ist, dass das Material entlang des Zuführungskanals (2) geleitet werden kann, und eine Formgebungsvorrichtung (1) mit dem Zuführungskanal (2), die so angeordnet ist, dass sie mit der Eingangsstelle in Verbindung steht, wobei die Formgebungsvorrichtung so ausgebildet ist, dass das zu handhabende Material in die Formgebungsvorrichtung und/oder durch sie hindurch mit Hilfe von zumindest teilweise Schwerkraft und/oder Sog und/oder einer Druckdifferenz des pneumatischen Rohrtransportsystems geleitet werden kann, **dadurch gekennzeichnet, dass** die Vorrichtung ein drehbares Handhabungselement (10) in der Formgebungsvorrichtung (1) umfasst, wobei das eine drehbare Handhabungselement so ausgebildet ist, dass es um eine Drehachse gedreht wird, wenn es Material handhabt, und wobei das eine drehbare Handhabungselement eine Öffnung (20) umfasst, die exzentrisch in Bezug auf die Drehachse des einen drehbaren Handhabungselements angeordnet ist, wobei das eine drehbare Handhabungselement (10) so ausgebildet ist, dass es das Material, das eingefüllt werden soll, in der Nähe einer Ausgangsöffnung anordnet und das Material, zusammen mit mindestens einer Kante (18) der Ausgangsöffnung der Formgebungsvorrichtung und/oder einer Wand eines Ausgangskanals (4) zu formen, wenn das eine drehbare Handhabungselement (10) mit einer Antriebsvorrichtung (7) gedreht wird, wobei die Formgebungsvorrichtung so ausgebildet ist, dass das Material (w) der Formgebungsvorrichtung als eine Einheit zugeführt werden kann, wie z.B. eine Charge von in einen Beutel verpacktem Material, in die Formvorrichtung zugeführt werden kann, wobei das eine drehbare Handhabungselement (10) ringförmig ist und die Öffnung (20) von einer ersten Seite (23), einer Einlassseite, des einen drehbaren Handhabungselements zu einer anderen Seite (24), einer Auslassseite, umfasst.

10. Vorrichtung nach Anspruch 9, **dadurch gekennzeichnet, dass** das eine drehbare Handhabungselement (10) der Formgebungsvorrichtung so angeordnet ist, dass es das zu behandelnde Material durch die Öffnung (20) des einen drehbaren Handhabungselements und/oder durch die Ausgangsöffnung (18, 40) der Formgebungsvorrichtung zuführt, wenn das eine drehbare Handhabungselement in der ersten Richtung gedreht wird.

11. Vorrichtung nach Anspruch 9 oder 10, **dadurch gekennzeichnet, dass** die Drehrichtung des einen drehbaren Handhabungselements (10) veränderbar ausgebildet ist.

12. Vorrichtung nach einem der Ansprüche 9 bis 11, **dadurch gekennzeichnet, dass** die Dicke (S) des einen drehbaren Handhabungselements (10), d. h. der Abstand seiner oberen Fläche von der unteren Fläche (24) des einen drehbaren Handhabungselements an der Stelle des Randes (21) der Öffnung (20), in Richtung der Ausgangsöffnung (18, 40) der Formgebungsvorrichtung abnimmt.

13. Vorrichtung nach einem der Ansprüche 9 bis 12, **dadurch gekennzeichnet, dass** ein Abschnitt (22) der zur Öffnung (20) hin geneigten Fläche in der oberen Fläche (24) des einen drehbaren Handhabungselements ausgebildet ist.

14. Vorrichtung nach einem der Ansprüche 9 bis 13, **dadurch gekennzeichnet, dass** das pneumatische Materialfördersystem ein Rohrtransportsystem für Material, insbesondere Abfallmaterial, ist und so ausgestaltet ist, dass Abfall, vorzugsweise in Säcke verpackt, von der Eingangsstelle in eine Trenneinrichtung gefördert wird, wo der zu transportierende Abfall von der Transportluft getrennt wird.

15. Vorrichtung nach einem der Ansprüche 9 bis 14, **dadurch gekennzeichnet, dass** die Drehrichtung des einen drehbaren Handhabungselements (10) so gestaltet ist, dass sie in Sequenzen veränderbar ist.

## Revendications

1. Procédé de manipulation de matériau dans un système de transfert par tube pneumatique, dans lequel un matériau, tel qu'un matériau de déchets, est introduit à partir d'une ouverture d'entrée d'un point d'entrée (3), par exemple à partir de l'ouverture d'entrée d'une goulotte d'évacuation d'ordures ou de tout autre point d'entrée, et est acheminé le long d'un canal d'alimentation (2) avec un dispositif de mise en forme (1) disposé en liaison avec le point d'entrée, auquel cas le matériau à manipuler est acheminé dans le dispositif de mise en forme et/ou à travers celui-ci sous l'effet au moins partiellement de la gravité et/ou de l'aspiration et/ou d'une différence de pression du système de transport par tube pneumatique, **caractérisé en ce que** dans le procédé, le matériau est manipulé à l'aide d'un certain élément de manipulation rotatif (10) dans le dispositif de mise en forme (1), lequel certain élément de manipulation rotatif est mis en rotation autour d'un axe de rotation lors d'une manipulation du matériau et lequel certain élément de manipulation rotatif comprend une ouverture (20), qui est agencée de manière excentrée par rapport à l'axe de rotation du certain élément de manipulation rotatif, **en ce que** le certain élément de manipulation rotatif (10) agence le matériau à introduire à proximité d'une ouverture de sortie et met en forme le matériau, conjointement avec au moins un bord (18) de l'ouverture de sortie du dispositif de mise en forme et/ou une paroi d'un canal de sortie (4), lorsque le certain élément de manipulation rotatif (10) est mis en rotation à l'aide d'un dispositif d'entraînement (7), dans lequel le matériau (w) est conçu pour être introduit avec le dispositif de mise en forme typiquement par exemple une unité, telle qu'un lot de matériau conditionné dans un sac, à la fois, dans lequel le certain élément de manipulation rotatif (10) est analogue à un anneau, comprenant l'ouverture (20) à partir d'un premier côté (23), d'un côté d'entrée, du certain élément de manipulation rotatif, à un autre côté (24), un côté de sortie.

2. Procédé selon la revendication 1, **caractérisé en ce que** le certain élément de manipulation rotatif (10) du dispositif de mise en forme alimente le matériau à manipuler à travers l'ouverture (20) du certain élément de manipulation rotatif et à travers l'ouverture de sortie (18, 40) du dispositif de mise en forme, lors d'une rotation du certain élément de manipulation rotatif dans la première direction.

3. Procédé selon la revendication 1 ou 2, **caractérisé en ce que** le matériau est mis en forme avec la paroi (21) de l'ouverture du certain élément de manipulation rotatif et le bord (18) de l'ouverture de sortie du dispositif de mise en forme rotatif et la paroi du canal de sortie (40).

4. Procédé selon l'une quelconque des revendications 1 à 3, **caractérisé en ce que** l'épaisseur (S) du certain élément de manipulation rotatif (10), c'est-à-dire la distance de sa surface supérieure à la surface inférieure (24) du certain élément de manipulation rotatif, au niveau du point du bord (21) de l'ouverture (20), diminue vers l'ouverture de sortie (18, 40) du dispositif de mise en forme.

5. Procédé selon l'une quelconque des revendications 1 à 4, **caractérisé en ce que** la direction de rotation du certain élément de manipulation rotatif (10) peut être modifiée.

6. Procédé selon l'une quelconque des revendications 1 à 5, **caractérisée en ce qu'**une section (22) de la surface inclinée en pente vers l'ouverture (20) est formée dans la surface supérieure (24) du certain élément de manipulation rotatif.

7. Procédé selon l'une quelconque des revendications 1 à 6, **caractérisé en ce que** le système de manipulation de matériaux pneumatique est un système de transport de matériau par tube, plus particulièrement un matériau de déchets, dans lequel des déchets, de la manière la plus préférée conditionnés dans des sacs, sont transportés depuis le point d'entrée dans un dispositif de séparation, dans lequel les déchets transportés sont séparés de l'air de transport.

8. Procédé selon l'une quelconque des revendications 1 à 7, **caractérisé en ce que** le certain élément de manipulation rotatif (10) est entraîné en séquences, auquel cas le certain élément de manipulation (10) est mis en rotation dans une première direction pendant l'étendue d'une première période de temps (t₁) et après cela dans la direction opposée pendant une seconde période de temps (t₂).

9. Appareil pour manipuler un matériau dans un système de transfert par tube pneumatique, dans lequel un matériau, tel qu'un matériau de déchets, peut être introduit à partir d'une ouverture d'entrée d'un point d'entrée (3) dudit système de transfert par tube pneumatique, comme à partir de l'ouverture d'entrée d'une goulotte d'évacuation d'ordures ou de tout autre point d'entrée dudit système de transfert par tube pneumatique,
l'appareil comprenant un canal d'alimentation (2) adapté pour que ledit matériau puisse être acheminé le long dudit canal d'alimentation (2), et un dispositif de mise en forme (1) avec ledit canal d'alimentation (2) agencé pour être en liaison avec le point d'entrée, le dispositif de mise en forme étant configuré de telle sorte que le matériau à manipuler puisse être acheminé dans le dispositif de mise en forme et/ou à travers celui-ci à l'aide au moins partiellement de la gravité et/ou d'une aspiration et/ou d'une différence de pression du système de transport par tube pneumatique, **caractérisé en ce que** l'appareil comprend un certain élément de manipulation rotatif (10) dans ledit dispositif de mise en forme (1), dans lequel le certain élément de manipulation rotatif est configuré pour être mis en rotation autour d'un axe de rotation lors d'une manipulation de matériau et dans lequel le certain élément de manipulation rotatif comprend une ouverture (20), qui est agencée de manière excentrée par rapport à l'axe de rotation du certain élément de manipulation rotatif, **en ce que** le certain élément de manipulation rotatif (10) est configuré pour agencer le matériau à introduire à proximité d'une ouverture de sortie et pour mettre en forme le matériau, conjointement avec au moins un bord (18) de l'ouverture de sortie du dispositif de mise en forme et/ou une paroi d'un canal de sortie (4), lorsque le certain élément de manipulation rotatif (10) est mis en rotation à l'aide d'un dispositif d'entraînement (7), dans lequel le dispositif de mise en forme est configuré de telle sorte que le matériau (w) peut être introduit dans le dispositif de mise en forme sous la forme d'une unité, telle qu'un lot de matériau conditionné dans un sac, à la fois, dans lequel le certain élément de manipulation rotatif (10) est analogue à un anneau et comprend ladite ouverture (20) depuis un premier côté (23), un côté d'entrée, du certain élément de manipulation rotatif, vers un autre côté (24), un côté de sortie.

10. Appareil selon la revendication 9, **caractérisé en ce que** le certain élément de manipulation rotatif (10) du dispositif de mise en forme est agencé pour alimenter le matériau à manipuler à travers l'ouverture (20) du certain élément de manipulation rotatif et/ou à travers l'ouverture de sortie (18, 40) du dispositif de mise en forme, lors d'une rotation du certain élément de manipulation rotatif dans la première direction.

11. Dispositif selon la revendication 9 ou 10, **caractérisé en ce que** la direction de rotation du certain élément de manipulation rotatif (10) est configurée pour être modifiable.

12. Appareil selon l'une quelconque des revendications 9 à 11, **caractérisé en ce que** l'épaisseur (S) du certain élément de manipulation rotatif (10), c'est-à-dire la distance de sa surface supérieure à la surface inférieure (24) du certain élément de manipulation rotatif, au niveau du point du bord (21) de l'ouverture (20), diminue vers l'ouverture de sortie (18, 40) du dispositif de mise en forme.

13. Appareil selon l'une quelconque des revendications 9 à 12, **caractérisé en ce qu'**une section (22) de la surface inclinée en pente vers l'ouverture (20) est formée dans la surface supérieure (24) du certain élément de manipulation rotatif.

14. Dispositif selon l'une quelconque des revendications 9 à 13, **caractérisé en ce que** le système de manipulation de matériaux pneumatique est un système de transport de matériau par tube, plus particulièrement un matériau de déchets, et est configuré de telle sorte que des déchets, de la manière la plus préférée conditionnés dans des sacs, sont transportés depuis le point d'entrée dans un dispositif de séparation, dans lequel les déchets transportés sont séparés de l'air de transport.

15. Appareil selon l'une quelconque des revendications 9 à 14, **caractérisé en ce que** la direction de rotation de l'élément de manipulation rotatif (10) est configurée pour être modifiable en séquences.
